# EUROPEAN PATENT APPLICATION

(11) **EP 2 595 084 A2**
(43) Date of publication of application: **22.05.2013**
(21) Application number: 12191031.9
(22) Date of filing: 02.11.2012
(51) Int. Cl.: G06F 21/56

(54) **Program analyzing system and method**

(30) Priority: 15.11.2011 JP 2011249562
(71) Applicant: Hitachi Ltd., Tokyo 100-8280 (JP)
(72) Inventor: Kawaguchi, Nobutaka, Chiyoda-ku, Tokyo 100-8220 (JP); Kaji, Tadashi, Chiyoda-ku, Tokyo 100-8220 (JP); Yamaguchi, Hiroki, Chiyoda-ku, Tokyo 100-8220 (JP)
(74) Representative: Calderbank, Thomas Roger

(57) **Abstract**

According to the present invention, it is possible to efficiently analyze a program that conducts an activity at a specific time after activation or on a specific date. Main functional units of a program analyzing system that analyzes a program while adjusting a time passage speed of a program performance circumstance includes four functional units, that is, an analysis management unit, a sample performing unit, an activity recording unit, and an activity analyzing unit. The analysis management unit sets analysis conditions such as a time passage speed, a program performance starting time, and a performance ending time in the performance circumstance. The sample performing unit adjusts the time passage speed and the program performance starting time in accordance with determination of the analysis management unit and performs the program until the performance ending time. The activity recording unit monitors the performance circumstance and obtains an activity record of the program. The activity analyzing unit analyzes the activity record and clarifies a behavior of the program. Further, the analysis management unit resets the analysis condition based on an analysis result to perform a reanalysis.

## Description

The present invention relates to a program analyzing system that analyzes a behavior of a computer program that manipulates a time management function of a performance circumstance in which a program operates and records an activity of a program when a time passage speed in the performance circumstance is changed to a higher speed or a lower speed than an actual speed in a program analyzing system that analyzes a behavior of a computer program.

There are two kinds of analyzing methods, that is, static analysis and dynamic analysis, as a method that analyzes a behavior of a computer program without using a source code. In the static analysis, the behavior is investigated by analyzing an instruction code that is described in a program file. In contrast, in the dynamic analysis, the behavior is investigated by executing a program on a computer to observe an action at that time. Depending on the program, various protective plans for blocking the static analysis are prepared. Specifically, in recent years, malware (a malicious program such as a computer virus or spyware) obfuscates and encrypts a file structure in many cases in order to block the static analysis. Therefore, it takes a long time to investigate using the static analysis and experienced experts are required. In contrast, as compared with the static analysis, the dynamic analysis is hardly influenced by the obfuscation and encryption of a file because an actual action is observed to investigate the behavior. Further, the dynamic analysis may be completed in a comparatively short time.

Therefore, as disclosed in Japanese Patent Application Laid-Open Nos. 2009-181335 and JP-A-2009-37545, and IEEE International Conference of Communications 2008 Proceedings, "Malware Behavior Analysis in Isolated Miniature Network for Revealing Malware's a Network Activity", research and development of a system that automatically processes the dynamic analysis and achieves efficient analysis are being conducted. In these systems, malware is executed in a performance circumstance and a behavior (for example, file access or network communication of the malware) that is observed for a predetermined time is obtained and analyzed.

However, some programs conduct actual activities after a predetermined time elapses from starting to run or only on a predetermined date. Further, as in case of the Y2K problem, when a specific date is passed, malfunction occurs. When the above-mentioned program is analyzed by the above-mentioned system, it takes a lot of time to analyze the program or it may fail to analyze the program. In IEEE International Conference of Communications 2008 Proceedings, "Malware Behavior Analysis in Isolated Miniature Network for Revealing Malware' s a Network Activity", by invalidating a function that is executed by the malware which is a target of the analysis in order to terminate an activity for a predetermined time, the efficiency of the analysis is improved. However, this method needs to verify the time passage after performing the function and is not effective for malware which conducts activities only on a predetermined date.

The present invention has been made in an effort to provide a system and a method that efficiently analyze a program that conducts activities after a predetermined time elapses from starting to run or only on a predetermined date.

A program analyzing system disclosed here is a device that analyzes a program while adjusting a time passage speed of a program performance circumstance. Main functional parts of the program analyzing system are four units, that is, an analysis management unit, a sample performing unit, an activity recording unit, and an activity analyzing unit. Here, the "sample" refers to malware which is a target of the analysis. The analysis management unit sets analysis conditions such as a time passage speed, a program execution starting time, and an execution ending time in the performance circumstance. The sample performing unit adjusts the time passage speed and the program execution starting time and executes the program until the execution ending time in accordance with the determination of the analysis management unit. The activity recording unit monitors the performance circumstance and obtains an activity record of the program. The activity analyzing unit analyzes the activity record to clearly demonstrate a behavior of the program. Further the analysis management unit resets the analysis condition based on the analysis result to perform reanalysis.

According to the present invention, it is possible to efficiently analyze a program that conducts activities after a predetermined time elapses from starting to run or only on a predetermined date.

In the drawings:
FIG. 1 is a view illustrating entire configurations of a system that carries out an embodiment of the present invention;
FIG. 2 is a view illustrating a physical configuration of a system managing device;
FIG. 3 is a view illustrating a logical configuration of the system managing device;
FIG. 4 is a view illustrating a physical configuration of a sample performing device;
FIG. 5 is a view illustrating a logical configuration of a sample performing device;
FIG. 6 is a view illustrating a physical configuration of a timer;
FIG. 7 is a view illustrating a physical configuration of an activity analyzing device;
FIG. 8 is a view illustrating a logical configuration of the activity analyzing device;
FIG. 9 is a view illustrating an example of a record of an analyzing scenario DB;
FIG. 10 is a view illustrating an example of a record of an activity record DB;
FIG. 11 is a view illustrating an example of a record of a reanalysis rule DB;
FIG. 12 is a view illustrating an example of a record of an analysis result DB;
FIG. 13 is a view illustrating an example of a record of a recording rule DB;
FIG. 14 is a view illustrating an example of a record of an analysis rule DB;
FIG. 15 is a flowchart of managing seat management processing;
FIG. 16 is a flowchart of sample performing processing;
FIG. 17 is a view illustrating a relationship between a timer and a clock unit;
FIG. 18 is a flowchart of adjustment processing of time passage processing;
FIG. 19 is a flowchart of activity record processing;
FIG. 20 is a flowchart of activity analysis processing;
FIG. 21A is a view illustrating a correspondence relationship between a pulse of an oscillator and a clock signal to a CPU;
FIG. 21B is a view illustrating a correspondence relationship between a pulse of an oscillator and a clock signal to a CPU; and
FIG. 22 is a view illustrating various setting modes in the correspondence relationship between a pulse of an oscillator and a clock signal to a CPU.

Hereinafter, the embodiments of the present invention will be described based on examples illustrated in the drawings. In the embodiments, a system that analyzes malware whose time from running to activating or activity time is unclear by three kinds of devices which cooperate through a network will be described. After describing the embodiments, modifications will be described.

### (Configuration of system)

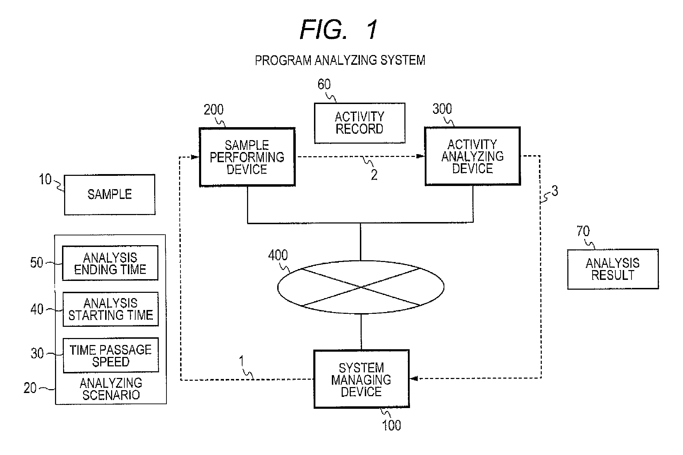

FIG. 1 is a view illustrating entire configurations of a system that carries out the present invention. Components of the system include four devices, that is, a system managing device 100, a sample performing device 200, an activity analyzing device 300, and a communication network 400.

The system managing device 100 is configured by one or more computers such as a known personal computer or a workstation. The system managing device 100 manages malware analysis processing that is performed in this system. Further, the system managing device 100 determines malware which becomes an analyzing target (hereinafter, referred to as sample), an analysis starting time that designates a time which is set at the time of starting the analysis in the performance circumstance, an analysis ending time that designates a time to end the analysis, and a time passage speed to give instruction to the sample performing device 200. Details of the configuration of the system managing device 100 and details of the communication with other devices will be described below.

The sample performing device 200 is configured by one or more computers such as a known personal computer or a workstation. The sample performing device 200 performs the sample under the performance circumstance in accordance with the instruction transmitted from the system managing device 100. Further, at the time of performing, the sample performing device 200 records activity information of the sample such as file access or network communication. Details of the configuration of the sample performing device 200 and details of the communication with other devices will be described below.

The activity analyzing device 300 is configured by one or more computers such as a known personal computer or a workstation. The activity analyzing device 300 analyzes the activity information of the sample recorded by the sample performing device 200 and creates an activity record that indicates which activities have been conducted by the sample. The sample performing device 100 determines presence and an order of the reanalysis referring to the activity record. Details of the configuration of the activity analyzing device 300 and details of the communication with other devices will be described below.

The communication network 400 maybe a public network such as WAN (world area network), a LAN (local area network), a cellular phone, or a PHS.

A line 1 of FIG. 1 illustrates a logical flow of information between the system managing device 100 and the sample performing device 200. Similarly, a line 2 illustrates a logical flow of division between the sample performing device 200 and the activity analyzing device 300 and a line 3 illustrates a logical flow of information between the activity analyzing device 300 and the system managing device 100. The lines 1, 2, and 3 also use the communication network 400 as a physical information transferring unit. Further, the physical information transfer may be carried out through an external storage device instead of directly carrying out transfer between the devices.

Through the line 1, two kinds of information, that is, a sample 10 and an analyzing scenario 20 are transferred from the system managing device 100 to the sample performing device 200. The analyzing scenario 20 includes a time passage speed 30, an analysis starting time 40, and an analysis ending time 50 within the sample performing device 200. The sample performing device that receives the analyzing scenario 20 sets a time of a performance circumstance to the analysis starting time 40 and a time passage speed of the analysis environment to the time passage speed 30. The analysis is performed until the time of the performance circumstance reaches the analysis ending time 50. The system managing device 100 simultaneously transmits one or more analyzing scenarios 20.

Through the line 2, an activity record 60 is transferred from the sample performing device 200 to the activity analyzing device 300. Similarly, through the line 3, an analysis result 70 is transferred from the activity analyzing device 300 to the system managing device 100.

Further, in FIG. 1, the system managing device 100, the sample performing device 200, and the activity analyzing device 300 are configured of separate processing devices, respectively, but may be implemented by one processing device. Further, the sample performing device 200 and the activity analyzing device 300 may be plural and the system managing device 100 may manage them.

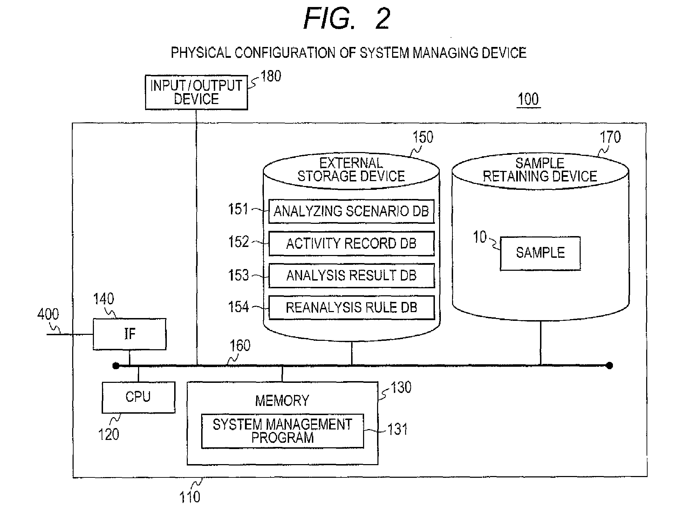

FIG. 2 is a view illustrating a physical configuration of the system managing device 100. The system managing device 100 includes a device main body 110 and an input/output device 180.

The device main body 110 includes a CPU 120, a memory 130, an interface 140, an external storage device 150, a bus 160, and a sample retaining device 170.

The CPU 120 is an arithmetic device for performing processing. The memory 130 is a storage medium including data in which a command set that the CPU 120 executes is described as a program.

The memory 130 includes a system management program 131. The CPU 120 executes the system management program 131 to manage the sample analysis. A specific management procedure will be described below.

The interface 140 is a communicating device for connecting the system managing device 100 to the communication network 400. Communicating equipment such as a LAN card corresponds thereto. The interface 140 may be denoted by IF in the drawing.

The external storage device 150 is configured by a storage medium such as an HDD (hard disk drive) and stores an analyzing scenario DB 151, an activity record DB 152, an analysis result DB 153, and a reanalysis rule DB 154. Details of the DBs will be described below.

The bus 160 connects the CPU 120, the memory 130, the IF 140, the external storage device 150, the sample retaining device 170, and an input/output device 180.

The sample retaining device 170 is configured by a storage medium such as an HDD and saves a sample 10 which is being analyzed.

The input/output device 180 is a device that inputs data to the system managing device 100 by a manager and outputs data in the system managing device 100. An example of the input/output device includes a keyboard, a mouse, and a display. Details of input/output contents will be described below.

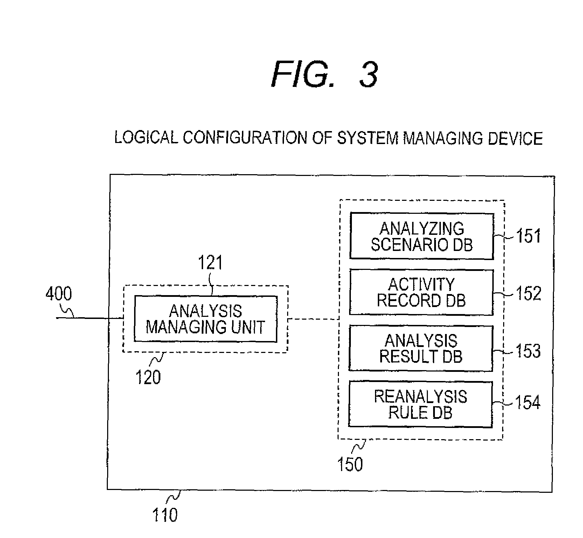

FIG. 3 is a functional configuration of the system managing device 100 and a relationship of the system managing device 100 and physical devices. The CPU 120 includes an analysis management unit 121. The function of the analysis management unit 121 is implemented by executing the system management program 131 by the CPU 120.

The analysis management unit 121 manages an analysis state of the sample 10 and transmits the analyzing scenario 20 to the sample performing device 200 to instruct the sample performing method. Further, the analysis management unit 121 receives the analysis result 70 from the activity analyzing device 300 and determines the presence of the reanalysis or a reanalyzing method. The details will be described below.

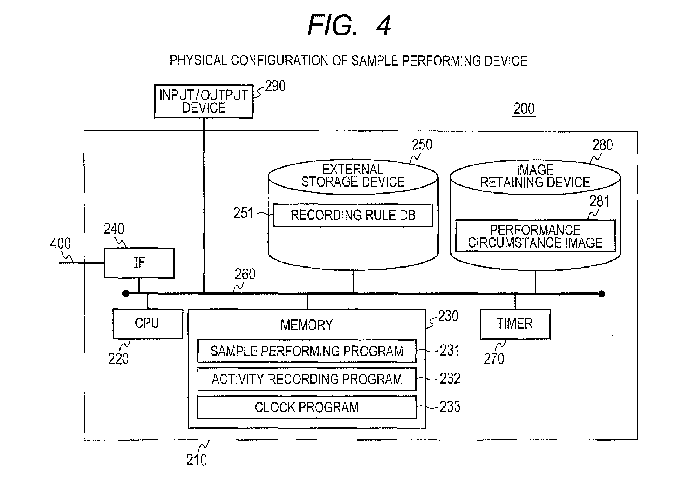

FIG. 4 is a view illustrating a physical configuration of the sample performing device 200. The sample performing device 200 includes a device main body 210 and an input/output device 290.

The device main body 210 includes a CPU 220, a memory 230, an interface 240, an external storage device 250, a bus 260, a timer 270, and an image retaining device 280.

The CPU 220 is an arithmetic device for performing processing. The memory 230 is a storage medium including data in which a command set that the CPU 220 executes is described as a program.

The memory 230 includes a sample performing program 231, an activity recording program 232, and a clock program 233. When the sample performing program 231 is executed by the CPU 220, the sample 10 is performed while adjusting a time passage speed. When the activity recording program 232 is executed by the CPU 220, an activity record 60 of the sample 10 is obtained. Further, when the clock program 233 is executed by the CPU 220, time information of the sample performing device 200 is provided to the sample 10, the sample performing program 231, and the activity recording program 232. Detailed management procedures of the programs will be described below.

The interface 240 is a communicating device for connecting the sample performing device 200 to the communication network 400. Communicating equipment such as a LAN card corresponds thereto. The interface 240 may be denoted by IF in the drawing.

The external storage device 250 is configured by a storage medium such as an HDD and stores a recording rule DB 251. In the recording rule DB, it is described which activity of the sample 10 is recorded by the activity recording program 232. Details of the DB will be described below.

The bus 260 connects the CPU 220, the memory 230, the IF 240, the external storage device 250, the timer 270, the image retaining device 280, and the input/output device 290.

The timer 270 is hardware including an element that vibrates for a predetermined period of time and measures the passage of time based on a measured vibration frequency. Therefore, the timer 270 transmits a signal to the CPU 220 whenever a predetermined time elapses. The CPU 220 receives the signal to know the elapsed time. The details of the timer 270 will be described below.

The image retaining device 280 is configured by a recording medium such as an HDD and stores a performance circumstance image 281. The performance circumstance image 281 is a file including configuration information of a normal operating system. If the performance circumstance image is executed on the CPU 220, the performance circumstance image provides a software environment for performing the sample 10. Further, in the image retaining device 280, information on a file or a registry created or changed while the sample 10 is performed is temporally stored.

The input/output device 290 is a device for inputting data to the sample performing device 200 by a manager and outputting data in the sample performing device 200. An example of the input/output device is a keyboard, a mouse, or a display. Details of the input/output contents will be described below.

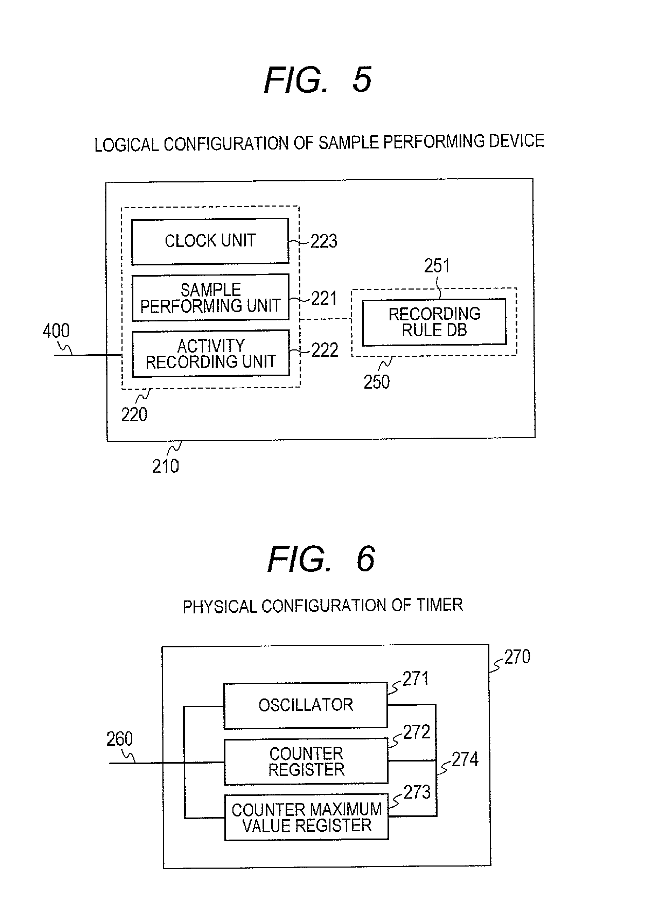

FIG. 5 is a view illustrating a functional configuration of the sample performing device 200 and a relationship between the sample performing device 200 and physical devices. The CPU 220 includes a sample performing unit 221, an activity recording unit 222, and a clock unit 223. A function of the sample performing unit 221 is implemented by the execution of the sample performing program 231 by the CPU 220. A function of the activity recording unit 222 is implemented by the execution of the activity recording program 232 by the CPU 220. A function of the clock unit 223 is implemented by the execution of the clock program 233 by the CPU 220.

The sample performing unit 221 performs the sample 10 received from the system managing device 100 in accordance with the analyzing scenario 20. In this case, the sample performing unit 221 accesses the timer 270 and adjusts the time passage speed. Details thereof will be described below.

The activity recording unit 222 records activities of the sample 10 which is performed by the sample performing unit 221 and transmits the activities to the activity analyzing device 300 as the activity record 60. Details thereof will be described below.

The clock 223 receives a signal from the timer 270 through the bus 260 and determines a present time in the sample performing device 200. Details of a procedure of determining a present time will be described below. Further, the sample 10 notices the present time by referring to the clock 223. For example, if the sample 10 is programmed so as to start a specific activity at 00:00:00 on December 31, 2010, when a time of the clock unit 223 becomes 00:00:00 on December 31, 2010, the activity is started.

FIG. 6 illustrates a physical configuration of the timer 270. The timer 270 includes an oscillator 271, a counter register 272, a counter maximum value register 273, and a bus 274.

The oscillator 271 is an element having a characteristic that oscillates at a constant frequency (generates a pulse) such as a crystal. The oscillator 271 applies a signal to the counter register 272 through the bus 274 whenever it oscillates. For example, if the oscillator has an oscillating period of 1 M (=1000000) Hz, the oscillator oscillates once for every one micro second and applies a signal to the counter register 272.

The counter register 272 is an element which is capable of storing a predetermined digit number. If the counter register 272 receives a signal from the oscillator 271, the counter register 272 adds one to the stored value. The counter register 272 compares an internal value with a value which is stored in the counter maximum value register 273 through the bus 274 whenever the internal value is added up by +1. If the value of the counter register 272 becomes equal to a value in the counter maximum value register 273, the counter register 272 transmits a signal (clock signal) to the CPU 220 through the bus 260. After transmitting the signal, a value of the counter register 272 is reset to 0.

The counter maximum value register 273 is an element in which a specific value is stored and the value is compared with the value in the counter register 272 as described above.

As an example, if an oscillation period of the oscillator 271 is 1 MHz and a value of the counter maximum value register 273 is 10000, 100 times for one second (= 1 M/10000), a value of the counter register 272 becomes equal to the value of the counter maximum value register 273 and a signal is transmitted to the CPU 220.

Further, as a configuration of the timer 270, the value of the counter register 272 may be added up not by +1, but a predetermined value whenever the oscillator 271 oscillates. When the value of the counter register 272 is added up, as the additional value becomes larger, an interval when the signal is transmitted to the CPU 220 becomes shorter. For example, if the oscillation period of the oscillator 271 is 1 MHz and the value of the counter maximum value register 273 is 10000, when the additional value of the counter register 272 is +2, a signal is generated 50 times for one second.

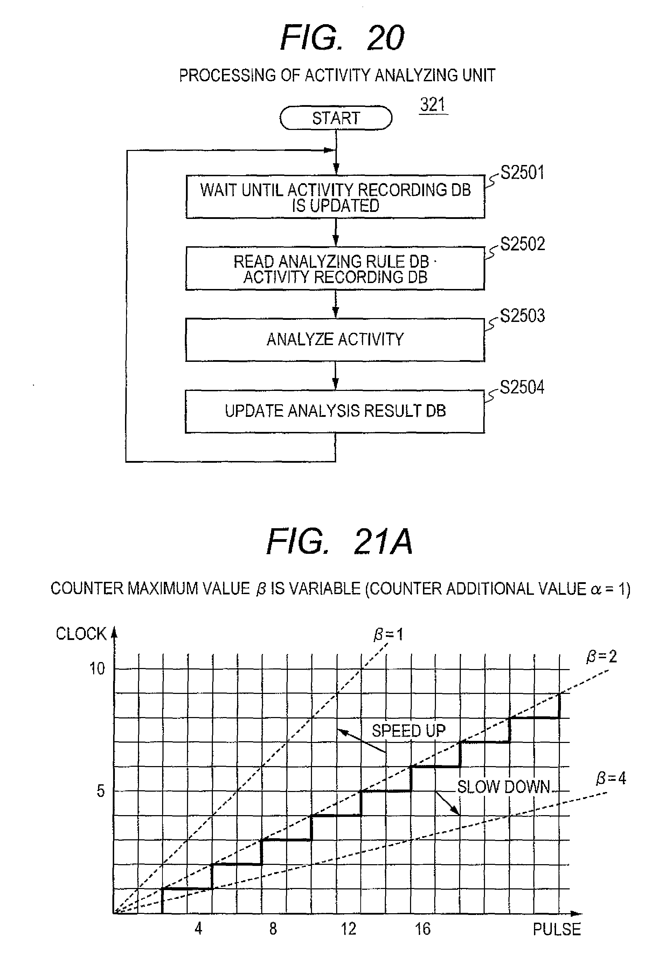

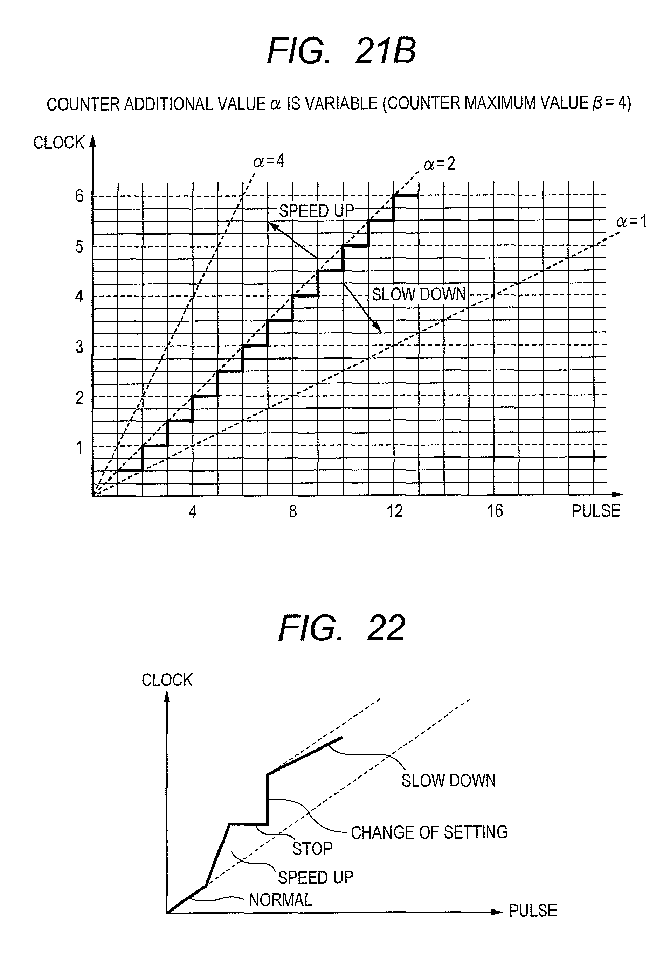

As described above, a correspondence relationship between a pulse of the oscillator and a clock signal to the CPU is illustrated in FIGS. 21A and 21B. FIGS. 21A and 21B illustrate that when a counter additional value is α and a counter maximum value is β, a combination of α and β is varied. FIG. 21A illustrates the correspondence relationship when the counter additional value α is fixed to 1 and the counter maximum value β is varied. FIG. 21B illustrates the correspondence relationship when the counter maximum value β is fixed to 4 and the counter additional value α is varied. Broken lines having different slopes illustrated in FIG. 21A and 21B are envelopes of a step function in the drawing and indicate a correspondence relationship (Tc = (α/β)Tp) of a pulse Tp and a clock Tc. However, in this case, α ≤ β and the correspondence relationship is determined with a ratio of α and β. "Speed up" or "slow down" of the clock may be achieved by changing the ratio. Therefore, the correspondence relationships of β = 2 of FIG. 21A and α = 2 of FIG. 21B are the same (in both cases, with the increase of two pulses, one clock is increased).

Further, when the clock is generated by subtracting the value of the counter register 272, whenever the value of the counter register 272 becomes 0, the signal is transmitted. Therefore, after transmitting the signal, the value of the counter register 272 is reset to a value of the counter maximum value register 273. Further, when the proceeding of the processing is stopped, the count processing of the timer 270 is stopped.

The above-mentioned various setting modes in the correspondence relationship of the pulse of the oscillator and the clock to the CPU are illustrated in FIG. 22. In other words, various setting modes, such as "normal" which is a correspondence relationship at the time of normal operation of the program, "speed up" that makes the clock proceed faster than a pulse of the oscillator, "stop" that stops the proceeding of the processing by stopping the operation of the timer, "change of setting" that discontinuously changes the proceeding of the processing by changing a value of the clock into a predetermined value, and "slow down" that makes the clock proceed slower than the pulse of the oscillator are designated.

The bus 260 connects the oscillator 271, the counter register 272, and the counter maximum value register 273.

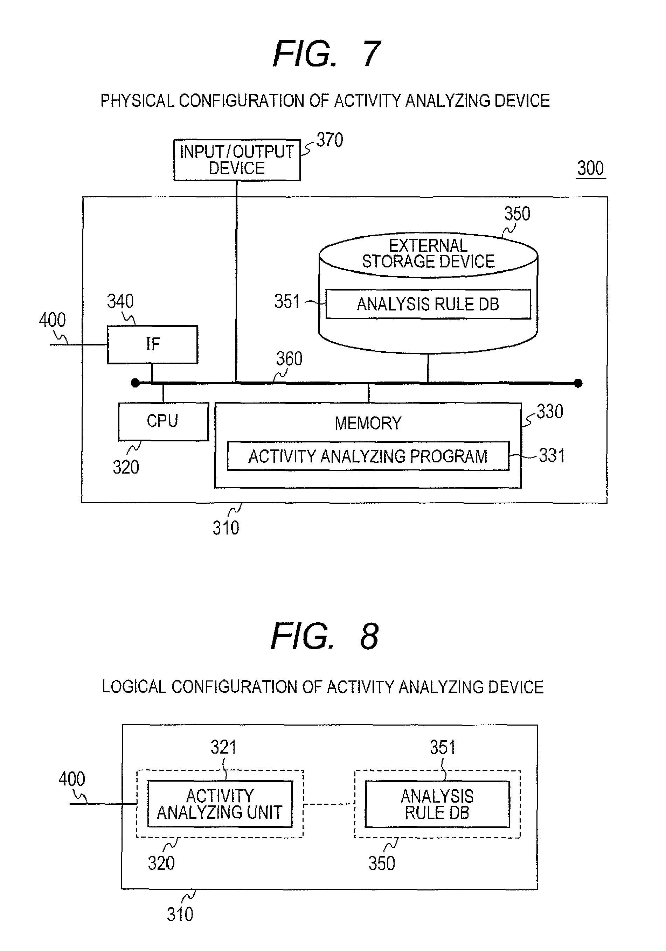

FIG. 7 is a view illustrating a physical configuration of the activity analyzing device 300. The activity analyzing device 300 includes a device main body 310 and an input/output device 370.

The device main body 310 includes a CPU 320, a memory 330, an interface 340, an external storage device 350, and a bus 360.

The CPU 320 is an arithmetic device for performing processing. The memory 330 is a storage medium including data in which a command set that the CPU 320 executes is described as a program.

The memory 330 includes an activity analyzing program 331. The activity analyzing program 331 is executed by the CPU 320 to analyze the activity record 60. A specific analysis procedure will be described below.

The interface 340 is a communicating device for connecting the activity analyzing device 300 to the communication network 400. Communicating equipment such as a LAN card corresponds thereto. The interface 340 may be denoted by IF in the drawing.

The external storage device 350 is configured by a storage medium such as an HDD and stores an analysis rule DB 351. Details of the DBs will be described below.

The bus 360 connects the CPU 320, the memory 330, the IF 340, the external storage device 350, and an input/output device 370.

The input/output device 370 is a device for inputting data to the activity analyzing device 300 by a manager and outputting data in the system managing device 100. An example of the input/output device is a keyboard, a mouse, or a display. Details of the input/output contents will be described below.

FIG. 8 is a view illustrating a functional configuration of the system managing device 300 and a relationship between the system managing device 300 and physical devices. The CPU 320 includes an activity analyzing unit 321. The function of the activity analyzing unit 321 is implemented by executing the activity analyzing program 331 by the CPU 320.

The activity analyzing unit 321 analyzes the contents of the activity record 60 created by the sample performing device 200 and outputs the analysis result 70 of the sample 10. Details thereof will be described below.

### (Description of processing)

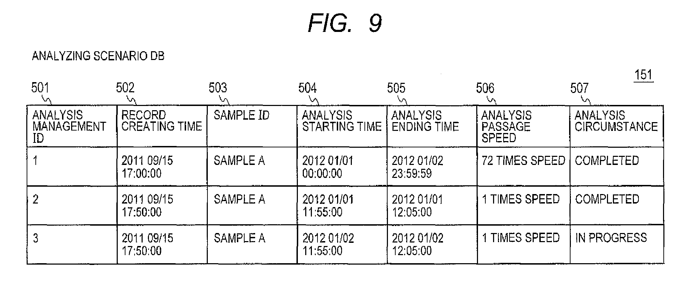

In FIG. 9 and subsequent drawings, configuration examples and of DBs included in the system and flowcharts of functional units are illustrated.

In the configuration examples in FIG. 9 and subsequent drawings, it is assumed that the analysis of the sample 10 is performed in the following procedures.

At 17:00:00 on September 15, 2011, the system managing device 100 starts analysis of the sample 10. In the analysis, the sample performing device 200 is instructed to perform a sample A (processing for the sample A) with a time passage speed of 72 times speed in real time for 48 hours from 00:00:00 on January 1, 2012 to 23:59:59 on January 1, 2012. In other words, the processing for 48 hours is performed for 40 minutes (48/72 = 2/3 hour). After completing the processing, the activity record is analyzed by the activity analyzing device 300 and the analysis result is output. Referring to the analysis result, since there is a period when the analysis is failed, the system managing device 100 reanalyzes the sample 10. In the reanalysis, the sample performing device 200 is instructed to perform a sample A with a time passage speed which is equal to the real time (one times speed) during a period from 11:55:00 on January 1, 2012 to 12:05:00 on January 1, 2012 and during a period from 11:55:00 on January 2, 2012 to 12:05:00 on January 2, 2012. Since the reanalysis is a success, the analysis for the sample A is completed.

### (Various tables)

FIG. 9 is a view illustrating a configuration of the analyzing scenario DB 151. Each record in the analyzing scenario DB 151 stores a sample analyzing method and an analysis state for a sample. The records are stored in the analyzing scenario DB 151 at the time of determining the analyzing scenario by the system managing device 100.

The analysis management ID 501 is used to specifically recognize the records in the analyzing scenario DB 151. Therefore, a value in each analysis management ID 501 is unique in the analyzing scenario DB 151.

A record creating time 502 indicates a time when a record is created. A time in the system managing device 100 is applied to the record creating time 502.

A sample ID 503 is a number for specifically identifying each sample analyzed by the system. If the same sample ID 503 is set for different records, it means that the same sample is analyzed plural times in different conditions.

As for an analysis starting time 504, a time when the sample performing device 200 starts performing the sample 10 indicated by a time in the sample performing device 200. Therefore, a value which is largely different from the record creating time 502 may be input. As an analysis ending time 505, a time when the sample performing device 200 completes performing the sample 10 is indicated by a time in the sample performing device 200. Therefore, a value which is largely different from the record creating time 502 may be input.

For the time passage speed 506, a passing speed of a time that is managed by the timer 270 in the sample performing device 200 that performs the sample is represented by a magnification of normal time passage speed. The time passage speed 506 uses a plus. For example, if the time passage speed 506 is ten times speed, while one second elapses with a normal flow of time, 10 seconds elapse with a time managed by the timer 270. Similarly, if the time passage speed 506 is 0.1 times speed, while one second elapses with a normal flow of time, 0.1 seconds elapse with a time managed by the timer 270.

In the embodiment, a lower limit, an upper limit, and a temporal granularity (for example, interval of 0.1) of the sample performing speed 506 are not specified. However, a lower limit, an upper limit, and a temporal granularity may be specified depending on a performance of the timer 270 of the sample performing device 200.

The analysis state 507 indicates a performing state of the analyzing scenario. A value that may be taken by the analysis state 507 includes "completed" or "during analysis". In the case of "completed", the performing and the analysis of the analyzing scenario have been completed. In the case of "during analysis", the analyzing scenario is performing the sample or analyzing the performing result.

In FIG. 9, examples of three kinds of records of the analyzing scenario are illustrated. In a record of the analysis management ID = 1, the record creating time is 17:00 on September 15, 2011 and a sample to be analyzed is a sample A. The system managing device 100 instructs the sample performing device 200 to perform the sample A for 48 hours from 00:00:00 on January 1, 2012 to 23:59:59 on January 2, 2012. Further, as the time passage speed 506, 72 times speed is designated. Therefore, a real time sample performing time becomes 40 minutes (= 48/72 * 60). The analysis state 507 becomes "completed".

In a record of the analysis management ID = 2, the record creating time is 17:50 on September 15, 2011 and a sample to be analyzed is the sample A which is the same as the record of the analysis ID = 1. The system managing device 100 instructs the sample performing device 200 to perform the sample A for 10 minutes from 11:55:00 on January 1, 2012 to 12:05:00 on January 1, 2012. Further, as the time passage speed 506, one times speed (= same as the real time passage speed) is designated. Therefore, a real time sample performing time becomes 10 minutes. The analysis state 507 becomes "completed".

In a record of the analysis management ID = 3, the record creating time is 17:50 on September 15, 2011 and a sample to be analyzed is the sample A which is the same as the record of the analysis TD = 1. The system managing device 100 instructs the sample performing device 200 to perform the sample A for 10 minutes from 11:55:00 on January 2, 2012 to 12:05:00 on January 2, 2012. Further, as the time passage speed 506, one times speed (= same as the real time passage speed) is designated. Therefore, a real time sample performing time becomes 10 minutes. The analysis state 507 becomes "during performance".

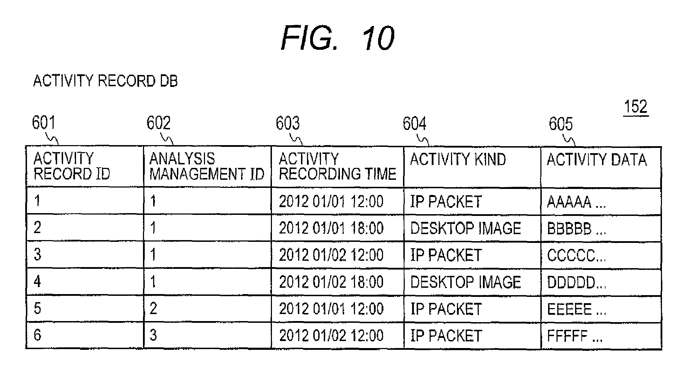

FIG. 10 is a view illustrating a record of the activity record DB 152. In the activity record DB 152, the activity record 60 of the sample 10 obtained by the activity recording unit 222 when the sample 10 is performed by the sample performing device 200 is recorded. Specifically, a recording rule DB 251, which will be described below, designates which activity record of the sample 10 is recorded.

The activity recording ID 601 is used to specifically recognize the records in the activity record DB 152. Therefore, a value of an activity recording ID 601 is unique in the activity record DB 152. The analysis management ID 602 designates records in the analyzing scenario DB 151 which correspond to records in the activity record DB 152 by the analysis management ID 501. In other words, the records are activity records of the sample 10 which are recorded while performing the analyzing scenario designated by the analysis management ID 602.

As for an activity recording time 603, a time when each record is recorded is recorded by a time in the sample performing device 200. Therefore, the activity recording time may be largely different from the real time.

An activity kind 604 indicates which kind of activity is recorded. In FIG. 10, as an example, "IP (Internet protocol" packet" and "desktop image" are illustrated. The "IP packet" indicates an IP packet which is transmitted and received by the sample 10. The "desktop image" indicates an image which is displayed in the input/output device 290 and drawn by the performance circumstance including the sample 10. As the other modified examples of the activity kind 604, the "function" called by the sample 10 or a "creation file" or "creation registry" created by the sample 10 during the performance is considered.

The activity data 605 refers to data which is actually recorded. If the activity kind 604 is "IP packet", corresponding activity data 605 is binary data of the IP packet. If the activity kind 604 is the "desktop image", corresponding activity data 605 is image data of the desktop image.

In FIG. 10, examples of six kinds of records of the activity record DB 152 are illustrated. The record in which the activity record ID 601 = 1 is an activity record obtained when the analysis management ID 602 = 1 is performed. The activity recording time 603 is 12:00:00 on January 1, 2011, the activity kind 604 is "IP packet" and the activity data 605 is "AAAAA..".

A record in which the activity record ID 601 = 2 is an activity record obtained when the analysis management ID 602 = 1 is performed as described above. The activity recording time 603 is 18:00:00 on January 1, 2011, the activity kind 604 is "desktop image", and the activity data 605 is "BBBBB...".

A record in which the activity record ID 601 = 3 is an activity record obtained when the analysis management ID 602 = 1 is performed as described above. The activity recording time 603 is 12:00:00 on January 2, 2011, the activity kind 604 is "IP packet", and the activity data 605 is "CCCCC...".

A record in which the activity record ID 601 = 4 is an activity record obtained when the analysis management ID 602 = 1 is performed as described above. The activity recording time 603 is 18:00:00 on January 2, 2011, the activity kind 604 is "desktop image", and the activity data 605 is "DDDDD...".

A record in which the activity record ID 601 = 5 is an activity record obtained when the analysis management ID 602 = 2 is performed as described above. The activity recording time 603 is 12:00:00 on January 1, 2011, the activity kind 604 is "IP packet", and the activity data 605 is "EEEEE...".

A record in which the activity record ID 601 = 6 is an activity record obtained when the analysis management ID 602 = 3 is performed as described above. The activity recording time 603 is 12:00:00 on January 2, 2011, the activity kind 604 is "IP packet", and the activity data 605 is "FFFFF...".

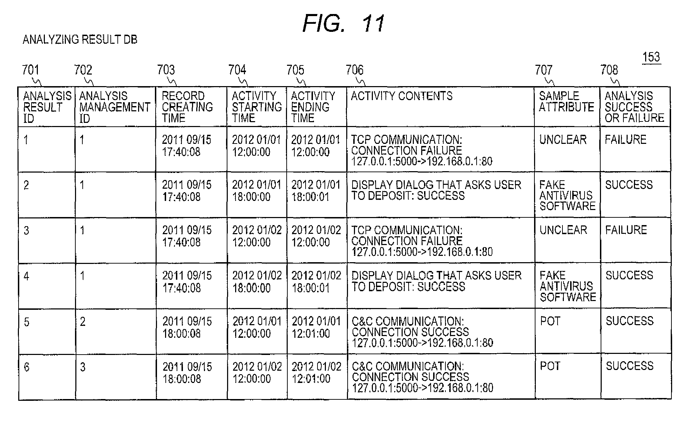

FIG. 11 is a view illustrating a configuration of an analysis result DB 153. The analysis result DB 153 stores the analysis result 70 created by the activity analyzing device 300. Each of the records indicates contents of the activity performed by the sample 10 and an activity time, which became apparent from an analysis result of the activity analyzing device 300.

Even though the analysis is performed based on the activity record DB 152, records in the activity record DB 152 and records in the analysis result DB 153 do not need to correspond to each other one to one. For example, if there is a case in which a plurality of analysis result records is created from one of activity recording records, one analysis result record may be created from a plurality of analysis result records.

The analysis result ID 701 is used to specifically recognize the records in the analysis result DB 153. Therefore, a value of the analysis result ID 701 is unique in the analysis result DB 153. The analysis management ID 702 designates the record in the analyzing scenario DB 151 to which each of the records in the analysis result DB 152 corresponds by the analysis management ID 501. In other words, the record becomes a result of analyzing the activity record created while performing the analyzing scenario designated by the analysis management ID 702.

As for a record creating time 703, a time when the record is recorded is recorded by a time in the activity analyzing device 300. As for an activity starting time 704, a time when the activity indicated by the record starts is recorded by a time in the sample performing device 200 at the time of performing the sample 10. Therefore, the activity starting time 704 may be largely different from the real time. As for an activity ending time 705, a time when the activity indicated by the record ends is recorded by a time in the sample performing device 200 at the time of performing the sample 10. Therefore, the activity ending time 705 may be largely different from the real time.

Activity contents 706 indicate activity contents of the sample 10, which became apparent from an analysis result. A sample attribute 707 indicates an attribute of the sample 10, which became apparent based on the activity contents 706, that is, indicates into which group of malware the sample 10 is classified. If the sample attribute 707 is not determined from the activity contents 706, it is recorded as "unclear".

Analysis success or failure 708 indicates whether the analysis indicated by the record is successful or not. If the analysis is successful, it is described as "success". If the analysis fails, it is described as "failure". The success or failure of the analysis is determined by whether the sample attribute 707 can be determined based on the activity contents 706. As will be described below, if the analysis success or failure 708 is "failure", the system managing device 100 may change the analyzing scenario to perform reanalysis.

In FIG. 11, examples of six kinds of records of the analysis result DB 153 are illustrated.

A record of the analysis result ID 701 = 1 is a record created by a result of the analyzing scenario in which the analysis management ID 702 = 1. A creating time of the record is 17:40:08 on September 15, 2011. According to the activity contents 706 of the record, between 12:00:00 on January 1, 2011 and 12:00:00 on January 1, 2011, connection from an IP address (127.0.0.1) of the sample performing device 200 to an 80-th port of TCP (transfer control protocol) of a separate terminal whose IP address is 192.168.0.1 is tried but failed. Therefore, the sample attribute 707 is "unclear" and the analysis success or failure 708 is "failure".

A record of the analysis result ID 701 = 2 is a record created by a result of the analyzing scenario in which the analysis management ID 702 = 1. A creating time of the record is 17:40:08 on September 15, 2011. According to the activity contents 706 of the record, between 18:00:00 on January 1, 2011 and 18:01:00 on January 1, 2011, a dialog that requests a user to deposit is displayed, which is a unique activity to the malware referred to as "fake antivirus software". Therefore, the sample attribute 707 is the "fake antivirus software" and the analysis success or failure 708 is "success".

A record of the analysis result ID 701 = 3 is a record created by a result of the analyzing scenario in which the analysis management ID 702 = 1. A creating time of the record is 17:40:08 on September 15, 2011. According to the activity contents 706 of the record, between 12:00:00 on January 2, 2011 and 12:00:00 on January 2, 2011, connection from an IP address (127.0.0.1) of the sample performing device 200 to the 80-th port of TCP of a separate terminal whose IP address is 192.168.0.1 is tried but failed. Therefore, the sample attribute 707 is "unclear" and the analysis success or failure 708 is "failure".

A record of the analysis result ID 701 = 4 is a record created by a result of the analyzing scenario in which the analysis management ID 702 = 1. A creating time of the record is 17:40:08 on September 15, 2011. According to the activity contents 706 of the record, between 18:00:00 on January 2, 2011 and 18:01:00 on January 2, 2011, a dialog that requests a user to deposit is displayed. Therefore, the sample attribute 707 is the "fake antivirus software" and the analysis success or failure 708 is "success".

A record of the analysis result ID 701 = 5 is a record created by a result of the analyzing scenario in which the analysis management ID 702 = 2. A creating time of the record is 18:00:08 on September 15, 2011. According to the activity contents 706 of the record, between 12:00:00 on January 1, 2011 and 12:01:00 on January 1, 2011, malware which is a kind of "BOT" which is a computer virus having a function to exchange with respect to the outside performs "C&C communication" from an IP address (127.0.0.1) of the sample performing device 200 to the 80-th port of TCP of a separate terminal whose IP address is 192.168.0.1. Therefore, the sample attribute 707 is "BOT" and the analysis success or failure 708 is "success".

A record of the analysis result ID 701 = 6 is a record created by a result of the analyzing scenario in which the analysis management ID 702 = 3. A creating time of the record is 18:00:08 on September 15, 2011. According to the activity contents 706 of the record, "C&C communication" between 12:00:00 on January 2, 2011 and 12:01:00 on January 2, 2011 is performed from an IP address (127.0.0.1) of the sample performing device 200 to the 80-th port of TCP of a separate terminal whose IP address is 192.168.0.1. Therefore, the sample attribute 707 is "BOT" and the analysis success or failure 708 is "success".

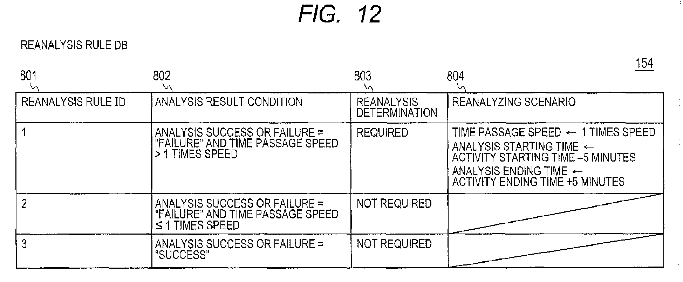

FIG. 12 is a view illustrating a configuration of the reanalysis rule DB 154. The reanalysis rule DB 154 is used for the system managing device 100 to determine whether the reanalysis of the sample 10 is necessary based on the contents of the analysis result DB 153. The records are configured by correspondence of conditions satisfied by the records of the analysis result DB 153 and presence of the reanalysis when the condition is satisfied.

The reanalysis rule ID 801 is used to specifically distinguish the records. Therefore, a value of the reanalysis rule ID 801 is unique in the reanalysis rule DB 154.

An analysis result condition 802 includes a condition which may be satisfied by the record of the analysis result DB 153 because the reanalysis rule is applied to the analysis result condition 802. The condition is represented as a logical equation using columns of the records of the analysis result DB 153 and columns of the records of the analyzing scenario DB 151 which may be referred to from the records.

A reanalysis determination 803 defines whether the reanalysis is performed when the records of the analysis result DB 153 satisfy the analysis result condition 802. A value of the reanalysis determination 803 is one of two values of "required" and "not required". In the case of "required", the reanalysis is performed. In the case of "not required", the reanalysis is not performed.

If the reanalysis determination 803 is "necessary", a reanalyzing scenario 804 determines a newly created analyzing scenario 20 again. Specifically, while referring to the values of the records of the analysis result DB 153, a value which may be taken by a column of a record of an analyzing scenario DB 151 which is newly added is determined. Further, with respect to the record whose reanalysis determination 803 is "unnecessary", the reanalyzing scenario 804 is empty.

In FIG. 12, examples of three kinds of records of the reanalysis rule DB 154 are illustrated.

A record of reanalysis rule ID = 1 is adapted when the analysis result condition 802 is that "analysis success or failure 708 = "failure" and the time passage speed 506 is larger than one times speed. Since the reanalysis determination 803 is "necessary", the reanalysis is performed. In the reanalyzing scenario 804, the reanalyzing scenario 20 is designated such that the time passage speed 506 is one times speed, the analysis starting time 504 is the value of the activity starting time 704 -5 minutes, and the analysis ending time 505 is the value of the activity ending time 705 +5 minutes.

A record of reanalysis rule ID = 2 is adapted when the analysis result condition 802 is that "analysis success or failure 708 = "failure" and the time passage speed 506 is one times speed or less. In this case, since the reanalysis determination 803 is "unnecessary", the reanalysis is not performed. Therefore, the reanalyzing scenario 804 is empty.

A record of reanalysis rule ID = 3 is adapted when the analysis result condition 802 is that "analysis success or failure 708 = "success". In this case, since the reanalysis determination 803 is "unnecessary", the reanalysis is not performed. Therefore, the reanalyzing scenario 804 is empty.

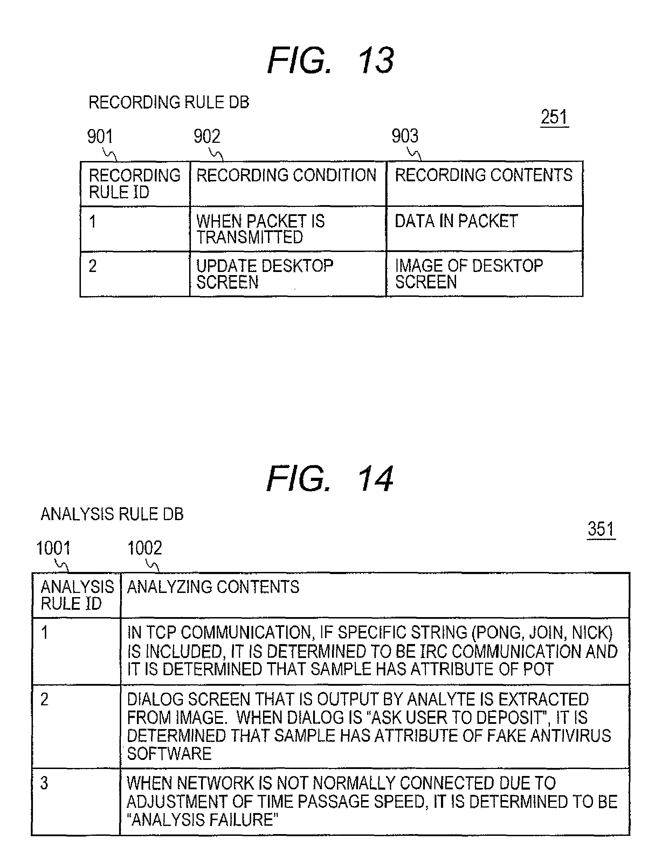

FIG. 13 is a view illustrating a configuration of the recording rule DB 251. The recording rule DB 251 determines which activity of the sample 10 is recorded by the activity recording unit 222.

A recording rule ID 901 is used to specifically identify a record of the recording rule DB 251. Therefore, a value of the recording rule ID 901 is unique in the recording rule DB 251.

A recording condition 902 designates when the activity is recorded which condition is satisfied by the activity of the sample 10. Recording contents 903 designate contents of information to be specifically recorded. The activity recording unit 222 has a function to determine whether the sample 10 conducts an activity appropriate for the recording condition 902 and a function to record information designated by the recording contents 903.

In FIG. 13, examples of two kinds of records of the recording rule DB 251 are illustrated.

A record of the recording rule ID 901 records "data in the packet" as indicated in the recording contents 903 when the recording condition 902 is "when the packet is transmitted". Specifically, the activity recording unit 222 observes the IF 240 to observe the activity that satisfies the recording condition 902. Further, the packet data is obtained from the IF 240 to obtain the information indicated in the recording contents 903.

A record of the recording rule ID 901 = 2 records "an image of the "desktop screen" as indicated in the recording contents 903 when the recording condition 902 is "when the desktop screen is updated". Specifically, the activity recording unit 222 observes the input/output device 290 to observe the activity that satisfies the recording condition 902. Further, the image data is obtained from the input/output device 290 to obtain the information indicated in the recording contents 903.

Further, as other examples which are not illustrated in FIG. 13, the memory 230 in which the sample 10 is performed is monitored to observe a call from a specific function of the sample 10 and record an argument which is transmitted to the function or a result of performing the function. Further, the image retaining device 280 is monitored to observe and obtain files created and changed by the sample 10 or registry information.

FIG. 14 is a view illustrating a configuration of the analysis rule DB 351. The activity analyzing unit 321 reads the record in the analysis rule DB 351 to perform analysis designated by the record in the analysis rule DB 351.

An analysis rule ID 1001 is used to specifically identify the records in the analysis rule DB 351. Therefore, a value of the analysis rule ID 1001 is unique in the analysis rule DB 351. In analysis contents 1002, a specific analyzing method is described.

In FIG. 14, examples of three kinds of records of the analysis rule DB 351 are illustrated.

A record of the analysis rule ID 1001=1 determines the communication as IRC communication when a specific word string (PONG, JOIN, or NICK), which is represented in the record in the analysis rule DB 351, is contained in the TCP communication and determines that the sample 10 has an attribute of BOT. Further, an analysis result for the record is determined as "analysis success".

A record of the analysis rule ID 1001=2 extracts a dialog screen output by the sample from an image represented in the record in the analysis rule DB 351. If the extracted dialog is "request a user to deposit", it is determined that the sample 10 has an attribute of fake antivirus software. Further, an analysis result for the record is determined as "analysis success.

When a case where the network connection is not normally performed due to the influence of the adjustment of the time passage speed is found from the record in the analysis rule DB 351, a record of the analysis rule ID 1001=3 determines that the attribute of the sample 10 is unclear. Further, an analysis result for the record is determined as "analysis failure".

### (Details of processing procedure)

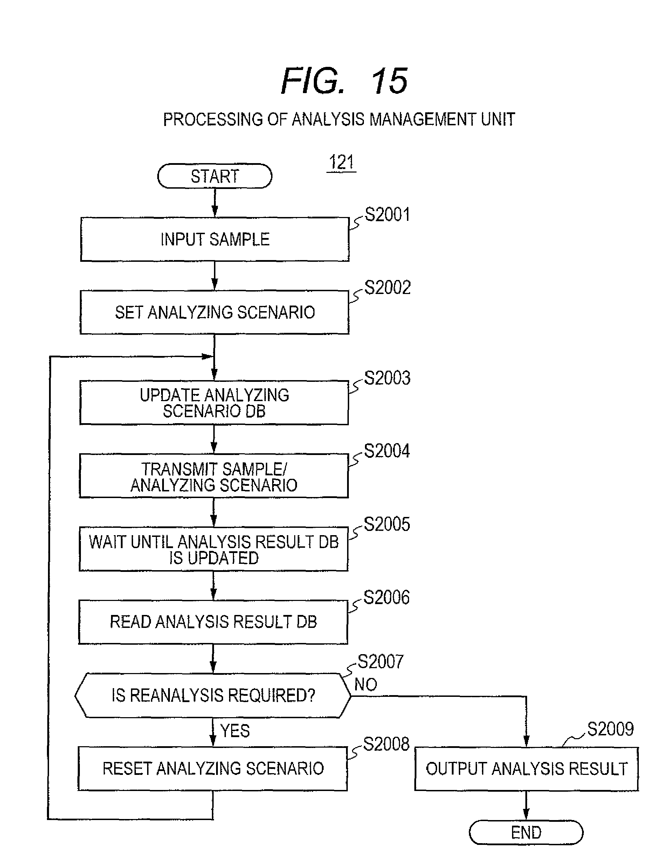

FIG. 15 is a flowchart of analysis management unit processing which is performed by the analysis management unit 121. In this flowchart, a series of flows from input of the sample to completion of the sample are illustrated.

In processing S2001, the sample 10 is input into the analysis management unit 121 through the system managing device 100. As an input method, the sample 10 may be input through the IF 140 from a separate terminal or input through an input/output device 180. The input sample 10 is stored in the sample retaining device 170.

In the processing S2002, the analysis management unit 121 determines the analyzing scenario 20, specifically, the time passage speed 30, the analysis starting time 40, and the analysis ending time 50. The value which is determined in each item may be a predetermined standard value or registered by an analyzer through the input/output device 180 every time.

In the processing S2003, the analysis management unit 121 stores the analyzing scenario 20 determined by the processing S2002 in the analyzing scenario DB 151. In this case, a unique value is registered in the analysis management ID 501, a stored time is registered in the record creating time 502, and "during analysis" is registered in the analysis state 507.

In the processing S2004, the sample 10 and one or more analyzing scenarios 20 are transmitted from the analysis management unit 121 to the sample performing unit 221 of the sample performing device 200 through the line 1.

In the processing S2005, the analysis management unit 121 waits until a new record is added to the analysis result DB 153, that is, until the activity analysis is completed by the activity analyzing unit 321 in the activity analyzing device 300. As a method of notifying that the new record is added to the analysis result DB 153, the analysis result DB 153 may have a mechanism that transmits a signal to the analysis management unit 121 or a mechanism that directly transmits the notification from the activity analyzing unit 321 to the analysis management unit 121.

In the processing S2006, the analysis management unit 121 reads the analysis result DB 153 to obtain a newly added record.

In the processing S2007, the analysis management unit 121 determines whether to require the reanalysis based on the read analysis result DB 153. As a basic direction, in accordance with the record in the reanalysis rule DB 154, if one or more records of the analysis result DB 153 are present, which is similar to a case in which it is determined that the reanalysis determination 803 = "required", it is determined that the reanalysis is required. Further, the record of the analysis result DB 153 is presented to the manager through the input/output device 180 to make a final decision.

In the processing S2008, if it is determined that the reanalysis is required = "YES" in the processing S2007, the analysis management unit 121 resets the analyzing scenario in accordance with the record in the reanalysis rule DB 154. After resetting, the processing returns to S2003.

In the processing S2009, if it is determined that the reanalysis is required = "NO" in the processing S2007, the analysis management unit 121 outputs the analysis result. As output contents, records in the analyzing scenario DB 151 and the analysis result DB 153 may be presented to the manager through the input/output device 180 or transmitted to a separate device through the network 400.

Next, using examples of the records in FIGS. 9, 11, and 12, a specific example of the processing performed in FIG. 15 will be described.

First, in the processing S2001, the analysis management unit obtains the sample A and stores the sample A in the sample retaining device 170. In the processing S2002, as an analyzing scenario of the sample A, it is determined that the time passage speed 30 is 72 times speed, the analysis starting time 40 is 00:00:00 on January 1, 2012, and the analysis ending time 50 is 23:59:59 on January 2, 2012.

In the processing S2003, the determined analyzing scenario is retained in the analyzing scenario DB 151 as a record of the analysis management ID = 1. In the processing S2004, the sample A and the analyzing scenario 20 corresponding to the analysis management ID = 1 are transmitted to the sample performing device 200. In the processing S2005, a waiting state is continued until four records, that is, the analysis result IDs 701 = 1, 2, 3, and 4 are output to the analysis result DB 153. In the processing S2006, records in the analysis result DB 153 of the analysis result ID 701 = 1 to 4 are read in.

In the processing S2007, the analysis success or failure 708 of the record in the analysis result DB 153 of the analysis result ID 701 = 1 and 3 is "failure" and it is determined that the reanalysis is required = "YES" based on the record of the reanalysis rule ID = 1 of the reanalysis rule DB 154.

In the processing S2008, based on the reanalysis rule DB 154, the analyzing scenario 20 is reset. Specifically, "the time passage speed 30 is 1 times speed, the analysis starting time 40 is 11:55:00 on January 1, 2012, and the analysis ending time 50 is 12:05:00 on January 2, 2012" is reset as the analyzing scenario 20 corresponding to the record of the analysis result ID 701 = 1 and "the time passage speed 30 is 1 times speed, the analysis starting time 40 is 00:00:00 on January 1, 2012, and the analysis ending time 50 is 23:59:59 on January 2, 2012" is reset as the analyzing scenario 20 corresponding to the record of the analysis result ID = 3.

The processing returns to the processing S2003 and two analyzing scenarios 20 determined in the processing S2008 are stored in the analyzing scenario DB 151 as records of the analysis management ID = 2 and 3.

In the processing S2004, the sample A and the analyzing scenario 20 reset in the processing S2008 are transmitted to the sample performing device 200. In the processing S2005, a waiting state is continued until two records, that is, the analysis result IDs 701 = 5 and 6 are output to the analysis result DB 153. In the processing S2006, records in the analysis result DB 153 of the analysis result IDs 701 = 5 and 6 are read in.

In the processing S2007, the analysis success or failure 708 of records in the analysis result DB 153 of the analysis result IDs 701 = 5 and 6 is all "success" so that it is determined that the reanalysis is required = "NO" based on the record of the reanalysis rule ID = 3 of the reanalysis rule DB 154.

In the processing S2009, in accordance with the records of the analysis result ID = 2, 4, 5, and 6 in the analysis result DB 153, a message saying "the sample A conducts a unique activity to the fake antivirus software which displays a dialog that requests the user to deposit on 12:00 on January 1, 2012 and 18:00 on January 2, 2012, and also, conducts a unique activity to the BOT that performs C&C communication with 80-th port of 192.168.0.1 on 12:00 on January 1, 2012 and 12:00 on January 2, 2012" is displayed through the input/output device 180.

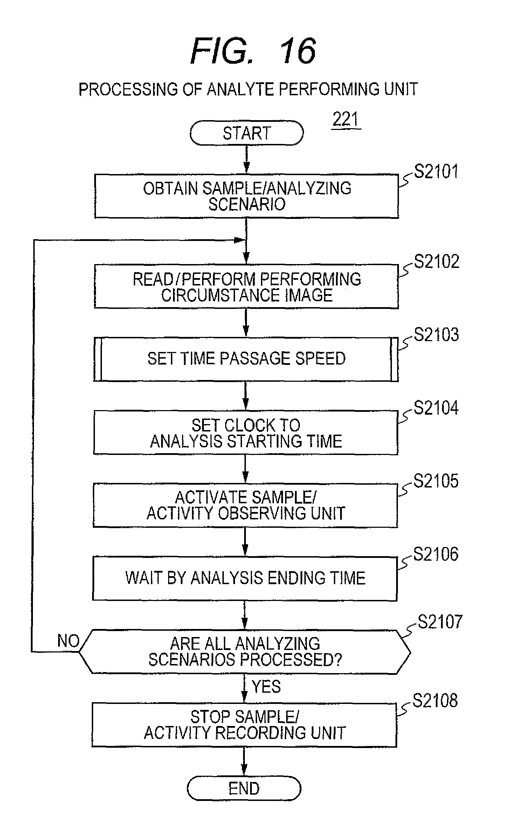

FIG. 16 is a flowchart of the sample performing processing which is performed by the sample performing unit 221 of the sample performing device 200.

In the processing S2101, the sample performing unit 221 receives the sample 10 and one or more analyzing scenarios 20 from the analysis management unit 121 of the system managing device 100.

In the processing S2102, an execution state image 281 is read from the image retaining device 280 and is developed and executed on the memory 230. In the processing S2103, in accordance with the time passage speed 30 of the analyzing scenario 20, the time passage speed of the execution state is set. A specific method will be described below.

In the processing S2104, the present time is set to the analysis starting time 40 of the analyzing scenario 20 by accessing to the clock unit 223 of the sample performing device 200. In the processing S2105, the sample 10 received in the processing S2101 and the activity recording unit 222 are activated. In the processing 2106, a waiting state is continued until the present time represented by the clock unit 223 becomes the analysis ending time 50 of the analyzing scenario 20.

In the processing S2107, it is checked whether the performing of the sample is completed for all analyzing scenarios 20 received in the processing S2101. If the result of the processing S2107 is "YES", in the processing S2108, the sample 10 and the activity recording unit 222 are stopped and the processing is completed. If the result of the processing S2107 is "NO", the processing returns to the processing S2102 and the execution state image 281 is read in again and the sample 10 is performed by the unprocessed analyzing scenario 20.

Next, using the example of the record in FIG. 9, a specific example of the processing performed in FIG. 16 will be described.

First, in the processing S2101, the sample performing unit 221 receives the analyzing scenario 20 and the sample A corresponding to the record of the analysis management ID 501 = 1 of the analyzing scenario DB 151 from the analysis management unit 121.

In the processing S2102, the performance circumstance image 281 for performing the sample A is read in. In the processing S2103, the time passage speed of the performance circumstance is set to 72 times speed. In the processing S2104, the present time of the clock unit 223 is set to "00:00:00 on January 1, 2012". In the processing S2105, the sample A and the activity recording unit 222 are performed. In the processing S2106, a waiting state is continued until the present time of the clock unit 223 becomes "23:59:59 on January 2, 2012".

In the processing S2107, the processing of all analyzing scenarios 20 is completed so that the sample A and the activity recording unit 222 are stopped in the processing S2108.

Thereafter, in the processing S2101, the sample performing unit 221 receives from the analysis management unit 121 the two analyzing scenarios 20 and the sample A corresponding to the records of the analysis management ID 501 = 2 and 3 of the analyzing scenario DB 151.

In the processing 2102, the performance circumstance image 281 for performing the sample A is read in. In the processing S2103, in accordance with the analyzing scenario 20 corresponding to the record of the analysis management ID 501 = 2, the time passage speed of the performance circumstance is set to one times speed. In the processing S2104, the present time of the clock unit 223 is set to "11:55:00 on January 1, 2012". In the processing S2105, the sample A and the activity recording unit 222 are performed. In the processing S2106, a waiting state is continued until the present time of the clock unit 223 becomes "12:00:05 on January 1, 2012".

In the processing S2107, since the processing of the analyzing scenario 20 corresponding to the record of the analysis management ID 501 = 3 has not been performed, the processing returns to the processing S2102. Thereafter, in the processing S2103 to 2106, the sample is performed in accordance with the analyzing scenario 20.

In the processing S2107, since all processing of two received analyzing scenarios 20 is completed, in the processing S2108, the processing of the sample A and the activity recording unit 222 is stopped and all processing is completed.

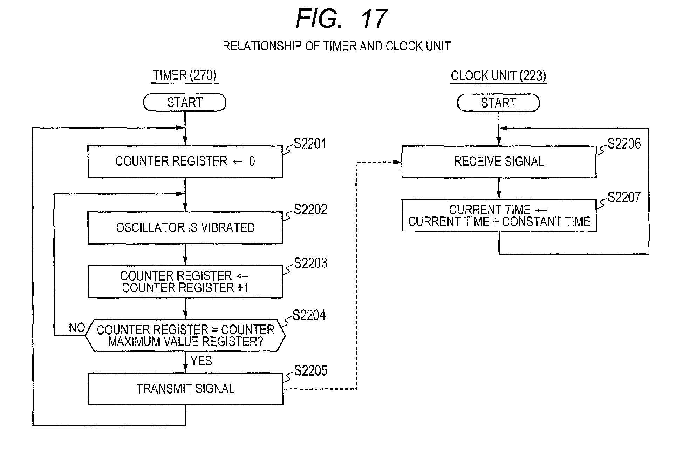

In FIG. 17, a relationship between the timer 270 and a clock unit 223 is illustrated. As described above, the timer 270 transmits a signal to the clock unit 223 whenever the oscillator 271 oscillates and the clock unit 223 determines the present time based on the number of received signals.

In the processing S2201, a value of a counter register 272 of the time 270 is initialized to 0. In the processing S2202, the oscillator 271 oscillates once. In the processing S2203, whenever the oscillator 271 oscillates, +1 is added to the value of the counter register 272. In the processing S2204, the value of the counter register 272 is compared with a value of a counter maximum value register 273. As a result of comparison, if the value of the counter register 272 is not equal to a value of the counter maximum value register 273, the processing proceeds to the processing S2202.

If the value of the counter register 272 is equal to a value of the counter maximum value register 273, the processing proceeds to the processing S2205. In the processing S2205, a signal is transmitted to the clock unit 223. After transmitting the signal, the processing proceeds to the processing S2201.

The clock unit 223, in the processing S2206, receives the signal transmitted from the processing S2205 of the timer 223. In the processing S2207, a constant time is added to the present time. By doing this, the present time of the sample performing device 200 is updated. After performing the processing S2207, the processing proceeds to the processing S2206 again and waits until a next signal is received.

Here, in the processing S2207, the constant time that is added to the present time determines accuracy of the time in the clock unit 223. If the constant time is one second, the accuracy of time of the clock unit 223 is one-second unit. Further, if the constant time is 0.01 second, the accuracy of time is 0.01-second unit.

The value of the counter maximum value register 273 is set at the time of activating the clock unit 223. Here, the oscillation frequency of oscillator 271 is 1 MHz (1,000,000 times oscillates for one second) and the accuracy of time of the clock unit 223 is 0.01 second. In this case, the clock unit 223 needs to receive 100 signals for one second so that the value of the counter maximum value register 273 is set to 10000 (= 1000000/100). Accordingly, as long as the value of the counter maximum value register 273 is not changed by another program, the clock unit 223 receives a signal at a rate of 100 times for one second and the present time is made to proceed by 0.01 second every time.

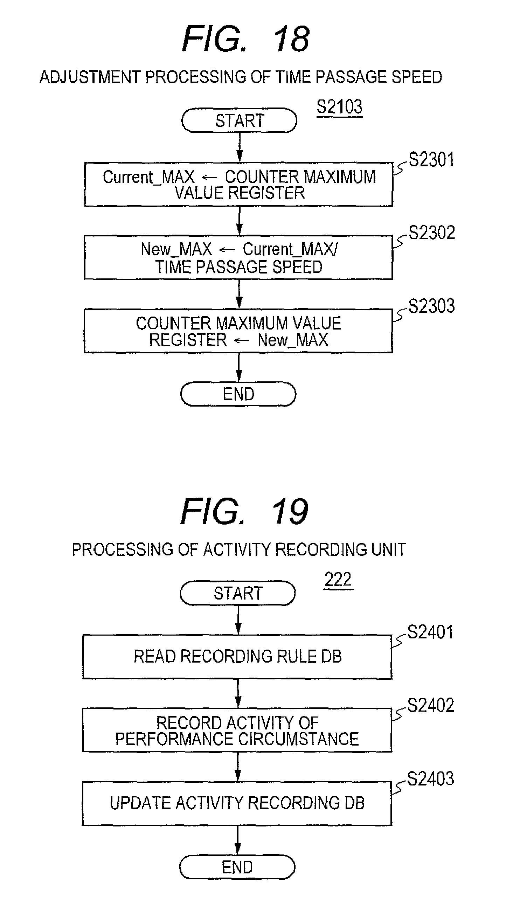

In FIG. 18, a flow of adjustment processing of the time passage speed which is performed in the processing S2103 of the sample performing unit of FIG. 16 is illustrated. In the adjustment processing, by changing the value of the counter maximum value register 273, the frequency when the timer 270 transmits a signal is adjusted.

In the processing S2301, the value of the counter maximum value register 273 is read in a variable Current_Max. In the processing S2302, a value obtained by dividing a value of the variable Current_MAX by a value of the time passage speed 30 is stored in the variable New_Max. In the processing S2302, a value of the variable New_Max is stored in the counter maximum value register 2303.

For example, as illustrated in FIG. 17, it is considered that in a state where 10000 is set as the value of the counter maximum value register 273, the time passage speed 506 is set to 72 times speed likes the record of the analysis management ID 503 = 1 of FIG. 9.

In the processing S2301, the value of the variable Current_Max is set to 10000. In the processing S2302, 139 (10000/72) is stored in the variable New_Max. In the processing S2303, 139 is saved in the counter maximum value register 273.

In the example of FIG. 17, the oscillation frequency of the oscillator 271 is 1 MHz so that the signal is transmitted from the timer 270 to the clock unit 223 about 7200 times per second. Whenever the signal is received, the clock unit 223 proceeds the present time by 0.01 second so that the time of the sample performing device 200 proceeds 72 seconds by receiving the signal 7200 times. Therefore, the 72 times speed designated by the time adjustment speed 30 is achieved.

FIG. 19 illustrates a flow of activity record processing performed by the activity recording unit 222.

In the processing S2401, the activity recording unit 222 reads the recording rule DB 251. In the processing S2402, in accordance with the read recording rule DB 251, the activity of the sample 10 under the performance circumstance is recorded. In the processing S2403, the sample performing unit 221 starts to write the activity record 60 created while performing the sample 10 in the activity record DB 152 at a timing when the activity recording unit is stopped in the processing S2108 of FIG. 16.

Next, using examples of the records in FIGS. 10 and 13, a specific example of the activity record processing performed in FIG. 19 will be described.

In the processing S2401, two records (recording rule ID 901 = 1 and 2) in the recording rule DB 251 are read in the activity recording unit 222. In the processing S2402, in accordance with the records of the read recording rule DB 251, "packet transmitting activity" and "updating desktop screen" of the sample A are recorded. A specific recording method is the same as the description of FIG. 13.

In the processing S2403, when the sample performing unit 221 performs execution processing in accordance with the analyzing scenario 20 which is the analysis management ID 602 = 1, the records of the activity record ID 601= 1, 2, 3, and 4 are written in the activity record DB 152. Further, if the sample performing unit 221 performs execution processing in accordance with the analyzing scenario 20 in which the analysis management ID 602 = 2 and 3, the records of the activity record ID 601= 5 and 6 are written in the activity record DB 152.

FIG. 20 illustrates a flow of activity analysis processing performed by the activity analyzing unit 321.

In the processing S2501, the activity analyzing unit 321 waits until the activity record DB 152 is updated and a new record is added. In the processing S2502, the activity analyzing unit 321 reads in the analysis rule DB 351 and the activity record DB 152.

In the processing S2503, in accordance with the analysis rule DB 351, the record of the activity record DB 152 is analyzed and the analysis result 70 is created. Further, during analysis, the manager updates the contents of the analysis rule DB 351 through the input/output device 370 or may manually analyze the records based on determination criteria which are not loaded in the analysis rule DB 351. In the processing S2504, the analysis result 70 created in the processing S2503 is saved in the analysis result DB 153.

Next, using examples of the records in FIGS. 10, 11 and 14, a specific example of the activity analysis record processing performed in FIG. 20 will be described.

In the processing S2501, a record having the activity record ID 601 of 1 to 4 is added to the activity record DB 152 so that the waiting state is released. In the processing S2502, records having the activity record ID 601 of 1 to 2 and three records of the analysis rule DB 351 are read in.

In the processing S2503, the record of analysis rule ID = 2 is applied to the record of the activity record ID = 2 and 4 and it is determined that the sample A has an attribute of "fake antivirus software". Further, the record of the analysis rule ID = 3 is applied to the records of the activity record ID = 1 and 3 and the network is not normally connected so that it is determined to be "analysis failure". In the processing S2504, the analysis result DB 153 is updated and records of the analysis result ID 701 = 1 to 4 are newly added. Thereafter, the processing proceeds to the processing S2501.

In the processing S2501, since the records having the activity record ID 601 of 5 to 6 are added to the activity record DB 152 again, the waiting state is released. In the processing S2502, the records having the activity record ID 601 of 1 to 2 and two records of the analysis rule DB 351 are read in.

In the processing S2503, the record of analysis rule ID = 1 is applied to the record of activity record ID = 5 and 6 and it is determined that the sample A has an attribute of "BOT". In the processing S2504, the analysis result DB 153 is updated and records of the analysis result ID 701 = 5 to 6 are newly added.

### (Modification)

Next, a modification of the system illustrated in FIG. 1 will be described.

### (1) Variable additional value

In the system illustrated in FIG. 1, by changing the value of the counter maximum value register 273, the time passage speed is adjusted. As the modification, the counter register 272 may change a value to be added to adjust the time. For example, in the embodiment, the value of the counter register 272 is added by one for every oscillation of the oscillator 271. However, the added value is +2 so that the time passage speed may be doubled. As an advantage of the modification, even in the timer 270 in which the counter maximum value register 273 cannot be changed, it is possible to adjust the time passage speed.

### (2) Change of frequency of oscillator

Further, by changing the frequency of the oscillator 271, the time passage speed may be adjusted. For example, by doubling the frequency of the oscillator 271, the time passage speed may be doubled. As an advantage of the modification, even in the timer 270 in which the counter maximum value register 273 cannot be changed, it is possible to adjust the time passage speed.

### (3) Adjustment of current time to constant time

Further, by adjusting the constant time which is added to the present time, which is managed by the clock unit 223 illustrated in the processing S2207 of FIG. 17, the time passage speed may be doubled. For example, although the constant time is set to 0.01 second in the description of FIG. 17, the constant time is reset to 0.02 second to double the time passage speed. As an advantage of the modification, even in the timer 270 in which the oscillator 271, the counter register 272, and the counter maximum value register 273 cannot be changed, it is possible to adjust the time passage speed.

### (4) Performing of Virtual machine

In the system illustrated in FIG. 1, the performance circumstance image 281 is directly executed on the memory 230. However, the performance circumstance image may be executed on a virtual machine which is a program that simulates the configuration and operation of the computer. In this modification, a virtual machine program is read in the memory 230. On the virtual machine program, the performance circumstance image 281, the sample performing program 231, the activity recording program 232, and the clock program 233 are operated. The sample 10 is performed on the virtual machine program. The virtual machine program simulates a configuration of a physical computer so as to have a timer simulating program corresponding to the timer 270. When the time is adjusted, instead of operating the timer 270 on the sample performing device 200, the value of the counter maximum value register of the timer simulating program on the virtual machine program is adjusted. As an advantage of the modification, the timer simulating program is operated instead of the timer 270 so that it is possible to surely change the oscillator or the register in the program.

### (5) Application to program

Further, in the system illustrated in FIG. 1, although the present invention is used to search operation of a program whose behavior is not clear, the present invention is also used to search whether any program normally operates for a predetermined period of time, in a short period of time. For example, in conditions that the time passage speed 30 increases 1000 times, the analysis starting time 40 is 00: 00: 00 on January 1, 2011, and the analysis ending time 50 is 23: 59: 59 on December 31, 2020, it may be tested in about 4 days whether the program operates normally for 10 years. In this modification, error information occurring by performing the program is stored as the activity record 60. As an advantage of the modification, it is possible to search unexpected errors of the program in a short time.

### (6) Manipulation of frequency of oscillator

Further, the CPU 220 includes an oscillator which is similar to the oscillator 271 therein and carries out one command whenever the oscillator oscillates one time. Therefore, by manipulating the frequency of the oscillator, the performing speed of the sample 10 may be changed. For example, by setting the frequency of the oscillator to be 0.5 times, the performing speed of the sample becomes approximately half. Accordingly, it is possible to test an operation when the sample 10 is performed by a computer having various performances. For example, if the sample 10 is a program that processes an IP packet to be received through the IF 140, the frequency of the oscillator of the CPU 220 is lowered so that it is possible to test how much the IP packet is processed without failure under heavy load.

## Claims

1. A program analyzing system that operates a program to be verified under a performance circumstance in which a time passage speed is arbitrarily adjustable, comprising:
a system managing device that manages an analysis state of the program and has an analysis management unit that determines a time passage speed;
at least one sample performing device having a sample performing unit that performs the program under the performance circumstance based on the time passage speed designated by the analysis management unit and an activity recording unit that obtains a behavior of the program under the performance circumstance as an activity record; and
at least one activity analyzing device having an activity analyzing unit that analyzes the activity record to output a feature of the program as an analysis result.

2. The program analyzing system according to claim 2, wherein the analysis management unit determines an analysis starting time in analyzing the program in addition to the time passage speed.

3. The program analyzing system according to claim 2, wherein the analysis management unit determines an analysis ending time when the analysis of the program ends in addition to the time passage speed and the analysis starting time.

4. The program analyzing system according to claim 3, wherein the analysis management unit instructs the sample performing unit to reanalyze the program based on the analysis result.

5. The program analyzing system according to claim 4, wherein the analysis management unit reanalyzes the sample with only a time when the program analysis is failed as a targeted.

6. The program analyzing system according to claim 4, wherein the analysis management unit changes the time passage speed when the reanalysis is performed.

7. The program analyzing system according to claim 4, wherein the analysis management unit has a reanalysis rule DB that determines the presence of the reanalysis based on the analysis result.

8. The program analyzing system according to claim 1, wherein the sample performing unit adjusts the time passage speed by manipulating a timer that manages the time by regularly sending a signal to a clock unit on a computer.

9. The program analyzing system according to claim 1, wherein the sample performing unit adjusts the time passage speed by manipulating the clock.

10. The program analyzing system according to claim 1, wherein the performance circumstance is performed not directly on the computer but on a virtual machine program that is executed on the computer.

11. The program analyzing system according to claim 2, wherein an operation of the program is repeated on a computer having various performances by adjusting an operation speed of a CPU in which the performance circumstance is performed.

12. The program analyzing system according to claim 1, wherein the activity recording unit records an activity in accordance with a recording rule DB that instructs which activity of the program is recorded.

13. The program analyzing system according to claim 1, wherein the activity analyzing unit analyzes the activity record in accordance with the analysis rule DB which designates an analyzing method.

14. The program analyzing system according to claim 12, wherein in the recording rule DB, network communication, screen output, function call, creation, correction, or deletion of a file, and creation, correction, or deletion of a registry are designated as a recording target.

15. The program analyzing system according to claim 1, wherein the analysis result includes a flag indicating success/failure of the analysis.

16. A program analyzing method that operates a program to be verified under a performance circumstance in which a time passage speed is arbitrarily adjustable by using a processing device, comprising the steps of:
managing an analysis state of the program and determining a time passage speed;
performing the program under the performance circumstance based on the time passage speed designated by the managing;
obtaining a behavior of the program under the performance circumstance as an activity record; and
analyzing the activity record to output a feature of the program as an analysis result.
